(19) Europäisches Patentamt / European Patent Office / Office européen des brevets

(11) **EP 4 704 028 A1**

(12) **EUROPEAN PATENT APPLICATION**

(43) Date of publication:
04.03.2026 Bulletin 2026/10

(21) Application number: 25183521.1

(22) Date of filing: **18.06.2025**

(51) International Patent Classification (IPC):
**G06T 7/00** (2017.01)　　　**G06T 7/11** (2017.01)
**G06V 10/50** (2022.01)

(52) Cooperative Patent Classification (CPC):
**G06T 7/11; G06T 7/0012; G06V 10/26;
G06V 10/50; G06V 20/693; G06V 20/695;**
G06T 2207/10056; G06T 2207/20021;
G06T 2207/20104; G06T 2207/30024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.08.2024　JP 2024144089**

(71) Applicant: **SCREEN Holdings Co., Ltd.
Kyoto-shi, Kyoto 602-8585 (JP)**

(72) Inventor: **YASUDA, Takuya
Kyoto, 602-8585 (JP)**

(74) Representative: **Goddar, Heinz J.
Boehmert & Boehmert
Anwaltspartnerschaft mbB
Pettenkoferstrasse 22
80336 München (DE)**

(54) **IMAGE PROCESSING METHOD, IMAGE PROCESSING APPARATUS, IMAGE PICKUP APPARATUS, AND COMPUTER-READABLE PROGRAM**

(57)　An image processing apparatus includes a memory memorizing a target image representing a target viewed from a predetermined direction and a height map indicating heights, in the predetermined direction, of portions of the target corresponding to respective pixel positions of the target image, a target area specifying part for specifying an analysis target area in the target image, an area division part for dividing the analysis target area into divided areas in accordance with the height map, an inadequate area specifying part for specifying an inadequate area among the divided areas, which does not satisfy a predetermined determination condition, and an area integrating part for acquiring a new divided area by calculating a determination score in a case where the inadequate area is integrated with each of divided areas contacting the inadequate area and then integrating the inadequate area with one divided area based on the determination score.

FIG. 4

CONTROL PART — 5, 500
　IMAGE PROCESSING PART
　　MEMORY — 501
　　IMAGE GENERATION PART — 502
　　TARGET AREA SPECIFYING PART — 503
　　AREA DIVISION PART — 504
　　INADEQUATE AREA SPECIFYING PART — 505
　　AREA INTEGRATING PART — 506
　　REPEAT CONTROL PART — 507

EP 4 704 028 A1

**Description**

**[CROSS REFERENCE TO RELATED APPLICATION]**

The present application claims the benefit of priority to Japanese Patent Application No. 2024-144089 filed on August 26, 2024, the content of which is incorporated herein by reference in its entirety.

**TECHNICAL FIELD**

The present invention relates to image processing.

**BACKGROUND ART**

A method of generating an image in which a whole target is in focus (i.e., an all-in-focus image), by imaging the target while changing a focal position along an optical axis, to thereby acquire a plurality of picked-up images, and then combining portions of the picked-up images, which are in focus, has been conventionally used in a microscope or the like. In Japanese Patent Application Laid Open Gazette No. 2018-42006 (Document 1), for example, a plurality of picked-up images are acquired while a focal position is changed, and by comparing respective sharpnesses of the plurality of picked-up images with one another at each pixel position (coordinates), determined is an image reference value which is a number for the picked-up image to be referred for a luminance value at the pixel position of an all-in-focus image. Then, by reflecting respective luminance values of the picked-up images indicated by the image reference values at surrounding pixel positions of each pixel position on the luminance value of the picked-up image indicated by the image reference value at the pixel position, a luminance value at the pixel position of the all-in-focus image is calculated. Further, in Japanese Patent Application Laid Open Gazette No. 2022-51094 (Document 2), at each pixel position, a predetermined number of higher-order sharpnesses are extracted as correction sharpnesses from the sharpnesses of the plurality of picked-up images (images obtained by changing a focal position), and the predetermined number of image reference values which are respective numbers for the picked-up images corresponding to the predetermined number of correction sharpnesses, respectively, are determined. Then, a luminance value at the pixel position of the all-in-focus image is calculated on the basis of the predetermined number of image reference values and the predetermined number of correction sharpnesses.

In a case where the target of the all-in-focus image is, for example, a cell cluster, when the cell cluster is analyzed by using the all-in-focus image, an area representing the cell cluster is extracted from the all-in-focus image. On the other hand, when a plurality of cell clusters which are present at different positions in an optical axis direction overlap one another in the optical axis direction (overlap one another as viewed along the optical axis), an all-in-focus image in which the plurality of cell clusters seem to be merged is generated. In the all-in-focus image, one area in which the plurality of cell clusters overlap one another is extracted as an analysis target area. As a method of dividing such an area, for example, the Watershed method is well known. In the Watershed method, by setting Seed regions serving as references for division, dividing lines for these can be acquired. When it is hard to obtain the Seed regions from the shape of the target area, however, division becomes difficult. Further, it is impossible to control the shape of each divided area. Therefore, required is a new method that makes it possible to appropriately divide the analysis target area.

**SUMMARY OF THE INVENTION**

It is an object of the present invention to appropriately divide an analysis target area.

A first aspect of the present invention is intended for an image processing method. The image processing method according to the first aspect of the present invention includes a) preparing a target image representing a target viewed from a predetermined direction and a height map indicating a height, in the predetermined direction, of a portion of the target corresponding to each pixel position of the target image, b) specifying an analysis target area in the target image, c) dividing the analysis target area into a plurality of divided areas in accordance with heights indicated by the height map, d) specifying an inadequate area among the plurality of divided areas, which does not satisfy a predetermined determination condition, and e) acquiring a new divided area by calculating a determination score in a case where the inadequate area is integrated with each of divided areas which are in contact with the inadequate area and then integrating the inadequate area with one divided area on the basis of the determination score.

According to the present invention, it is possible to appropriately divide the analysis target area on the basis of a height distribution or the like.

A second aspect of the present invention is intended for the image processing method according to the first aspect, and in the image processing method according to the second aspect of the present invention, the operation a) includes a1) preparing a plurality of picked-up images which are acquired by imaging the target while changing a focal position along an optical axis in parallel with the predetermined direction and a2) generating an all-in-focus image which is the target image and the height map on the basis of the plurality of picked-up images.

A third aspect of the present invention is intended for the image processing method according to the first aspect (or the first or second aspect), and in the image processing method according to the third aspect of the present invention, the operation c) includes generating a histogram of heights in the analysis target area on the basis of the height map and acquiring a set of pixel positions corresponding to each peak region in the histogram as a divided area.

A fourth aspect of the present invention is intended for the image processing method according to the first aspect (or any one of the first to third aspects), and the image processing method according to the fourth aspect of the present invention further includes specifying the new divided area acquired in the operation e) as a new inadequate area when the new divided area does not satisfy a predetermined determination condition.

A fifth aspect of the present invention is intended for the image processing method according to any one of the first to fourth aspects, and in the image processing method according to the fifth aspect of the present invention, in specification of the inadequate area in the operation d) and/or calculation of the determination score in the operation e), a height indicated by the height map is used.

A sixth aspect of the present invention is intended for an image processing apparatus. The image processing apparatus according to the sixth aspect of the present invention includes a memory for memorizing therein a target image representing a target viewed from a predetermined direction and a height map indicating a height, in the predetermined direction, of a portion of the target corresponding to each pixel position of the target image, a target area specifying part for specifying an analysis target area in the target image, an area division part for dividing the analysis target area into a plurality of divided areas in accordance with heights indicated by the height map, an inadequate area specifying part for specifying an inadequate area among the plurality of divided areas, which does not satisfy a predetermined determination condition, and an area integrating part for acquiring a new divided area by calculating a determination score in a case where the inadequate area is integrated with each of divided areas which are in contact with the inadequate area and then integrating the inadequate area with one divided area on the basis of the determination score.

A seventh aspect of the present invention is intended for the image processing apparatus according to the sixth aspect, and the image processing apparatus according to the seventh aspect of the present invention further includes an image generation part for generating an all-in-focus image which is the target image and the height map on the basis of a plurality of picked-up images which are acquired by imaging the target while changing a focal position along an optical axis in parallel with the predetermined direction.

An eighth aspect of the present invention is intended for the image processing apparatus according to the sixth aspect (or the sixth or seventh aspect), and in the image processing apparatus according to the eighth aspect of the present invention, the area division part generates a histogram of heights in the analysis target area on the basis of the height map and acquires a set of pixel positions corresponding to each peak region in the histogram as a divided area.

A ninth aspect of the present invention is intended for the image processing apparatus according to the sixth aspect (or any one of the sixth to eighth aspects), and in the image processing apparatus according to the ninth aspect of the present invention, when the new divided area acquired by the area integrating part does not satisfy a predetermined determination condition, the inadequate area specifying part specifies the new divided area as a new inadequate area.

A tenth aspect of the present invention is intended for the image processing apparatus according to the sixth aspect (or any one of the sixth to ninth aspects), and in the image processing apparatus according to the tenth aspect of the present invention, in specification of the inadequate area by the inadequate area specifying part and/or calculation of the determination score by the area integrating part, a height indicated by the height map is used.

An eleventh aspect of the present invention is intended for an image pickup apparatus. The image pickup apparatus according to the eleventh aspect of the present invention includes the image processing apparatus according to any one of the sixth to tenth aspects, an image pickup part for imaging the target, a lighting part for emitting light toward the target, and a focal position changing mechanism for changing a focal position of the image pickup part along an optical axis.

A twelfth aspect of the present invention is intended for a computer-readable program to cause a computer to perform image processing, and the program is executed by a computer to cause the computer to perform a) preparing a target image representing a target viewed from a predetermined direction and a height map indicating a height, in the predetermined direction, of a portion of the target corresponding to each pixel position of the target image, b) specifying an analysis target area in the target image, c) dividing the analysis target area into a plurality of divided areas in accordance with heights indicated by the height map, d) specifying an inadequate area among the plurality of divided areas, which does not satisfy a predetermined determination condition, and e) acquiring a new divided area by calculating a determination score in a case where the inadequate area is integrated with each of divided areas which are in contact with the inadequate area and then integrating the inadequate area with one divided area on the basis of the determination score.

These and other objects, features, aspects and advantages of the present invention will become more apparent from the following detailed description of the present invention when taken in conjunction with the accompanying drawings.

## BRIEF DESCRIPTION OF DRAWINGS

FIG. 1 is a view showing a configuration of an image pickup apparatus;

FIG. 2 is a perspective view showing one example of a well plate;

FIG. 3 is a view showing a configuration of a computer;

FIG. 4 is a block diagram showing a functional configuration of a control part;

FIG. 5 is a flowchart showing an operation flow for generating an all-in-focus image and dividing an analysis target area;

FIG. 6 is a longitudinal sectional view showing a well;

FIG. 7 is a view used for explaining generation of the all-in-focus image;

FIG. 8 is a view used for explaining generation of the all-in-focus image;

FIG. 9 is a view showing a height map;

FIG. 10 is a view showing a histogram of heights;

FIG. 11 is a view showing a plurality of divided areas;

FIG. 12 is a view showing adequate areas and an inadequate area;

FIG. 13A is a view showing an integrated area;

FIG. 13B is a view showing another integrated area; and

FIG. 14 is a view showing a new divided area.

## DESCRIPTION OF EMBODIMENTS

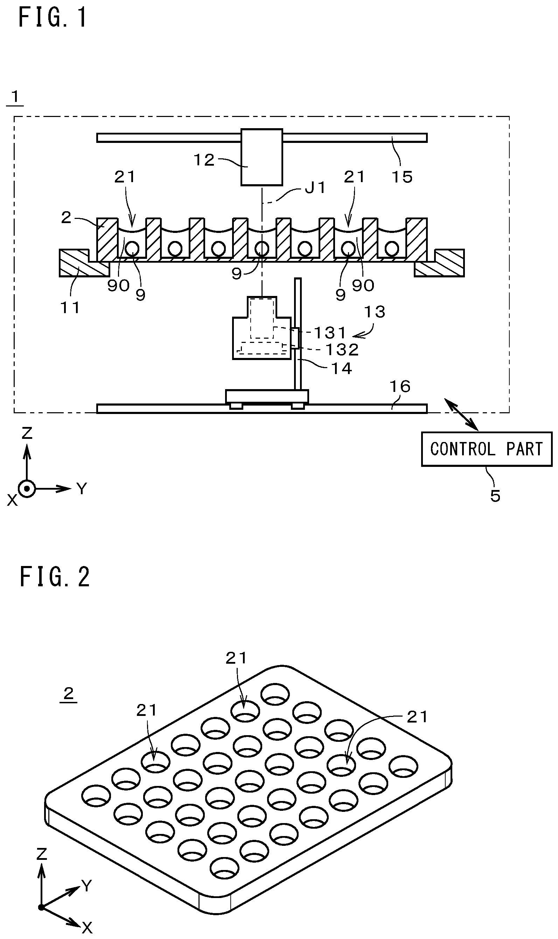

FIG. 1 is a view showing a configuration of an image pickup apparatus 1 in accordance with one preferred embodiment of the present invention. Further, FIG. 2 is a perspective view showing one example of a well plate 2 used in the image pickup apparatus 1. In FIGs. 1 and 2, three directions orthogonal to one another are shown as an X direction, a Y direction, and a Z direction by using arrows. In the exemplary case shown in FIGs. 1 and 2, the X direction and the Y direction are horizontal directions perpendicular to each other, and the Z direction is a vertical direction (i.e., an up-and-down direction). Depending on a target to be imaged in the image pickup apparatus 1, the Z direction may be a direction different from the vertical direction.

The image pickup apparatus 1 is an apparatus for imaging a sample 9 held by the well plate 2. The sample 9 includes, for example, cells, cell clusters such as spheroids, organoids, or the like, or a biological sample such as bacteria or the like. In the following description, the cells, the cell clusters, the bacteria, and the like are collectively referred to also as "cells or the like".

The well plate 2 is a substantially flat plate-like sample container. The well plate 2 is formed of a material having transparency (for example, a transparent resin) . In one main surface (a main surface on a (+Z) side, in the example shown in FIGs. 1 and 2) of the well plate 2, provided are a plurality of wells 21 which are recessed portions. The plurality of wells 21 are regularly arranged, for example, along the X direction and the Y direction. Each of the wells 21 has, for example, a substantially circular shape in a plan view. The number, the arrangement, the shape, or the like, of wells 21 in the well plate 2 may be changed as appropriate.

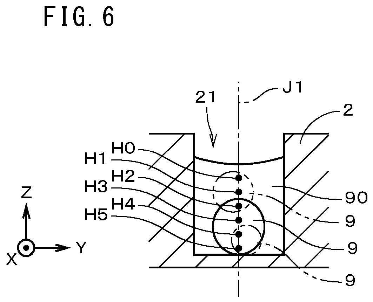

In each of the wells 21 of the well plate 2, a sample 9 which is a target to be imaged by the image pickup apparatus 1 is held together with a liquid or gel culture medium 90. The sample 9 is cells or the like having transparency, which is cultured in the culture medium 90 under predetermined culture conditions. Though the cells or the like in each well 21 are shown as one cluster in FIG. 1 and later-described FIG. 6, the cells or the like may be present as a plurality of clusters separated from one another. Further, the image pickup apparatus 1 may be used for imaging the sample 9 held in a flat sample container called a dish, instead of the well plate 2.

The image pickup apparatus 1 includes a holder 11, a lighting part 12, an image pickup part 13, an up-and-down moving mechanism 14, a lighting part moving mechanism 15, an image pickup part moving mechanism 16, and a control part 5. The holder 11 is a holding part for holding the well plate 2. The holder 11 is in contact with a peripheral portion of the main surface (i.e., the lower surface) on a (-Z) side of the well plate 2 from below, to thereby hold the well plate 2 in a substantially horizontal state.

The lighting part 12 is disposed above the holder 11 and emits illumination light downward (i.e., toward the (-Z) side). The illumination light emitted from the lighting part 12 is irradiated onto the well plate 2 held by the holder 11. The sample 9 inside the well 21 is thereby irradiated from above (i.e., from the (+Z) side). The lighting part 12 includes a light source and an illumination optical system which are not shown. As the light source, for example, a white LED (Light Emitting Diode) can be used.

The image pickup part 13 is disposed below the holder 11. The image pickup part 13 is a camera and includes an image pickup optical system 131 and an image pickup element 132. The image pickup optical system 131 includes a plurality of optical elements (not shown) including an objective lens. An optical axis J1 of the image pickup optical system 131 extends in substantially parallel with the Z direction (i.e., the up-and-down direction). The image pickup element 132 is disposed below the image pickup optical system 131. The image pickup element 132 is an area image sensor having a two-dimensional light receiving surface. As the image pickup element 132, for example, a CCD (Charge Coupled Device) or a CMOS (Complementary Metal-Oxide Semiconductor) can be used.

As described later, the image pickup part 13 is disposed vertically below one well 21 of the well plate 2. Further, the lighting part 12 is disposed vertically above the well 21 and faces the image pickup part 13 in the up-and-down direction with the well 21 interposed therebetween. The illumination light emitted from the lighting part 12 enters the well 21 from above and illuminates the sample 9 inside the well 21. The light going downward from a bottom surface (i.e., a surface on the (-Z) side) of the well 21 and having passed through the well plate 2 enters the light receiving surface of the image pickup element 132 through the image pickup optical system 131 of the image pickup part 13. The image pickup element 132 picks up an image of the sample 9, which is formed on the light receiving surface thereof by the image pickup optical system 131. The image of the sample 9 (hereinafter, referred to as a "picked-up image") picked up by the image pickup part 13 is a transmission image of the sample 9.

The up-and-down moving mechanism 14 moves the image pickup part 13 in the up-and-down direction. The lighting part moving mechanism 15 moves the lighting part 12 in the X direction and the Y direction. The image pickup part moving mechanism 16 moves the image pickup part 13 and the up-and-down moving mechanism 14 in the X direction and the Y direction. The up-and-down moving mechanism 14, the lighting part moving mechanism 15, and the image pickup part moving mechanism 16 each have, for example, a ball screw, a motor, or the like. In the up-and-down moving mechanism 14, the lighting part moving mechanism 15, and the image pickup part moving mechanism 16, any other mechanism such as a linear motor or the like may be used.

In generation of an all-in-focus image described later, in a state where the lighting part 12 and the image pickup part 13 are disposed vertically above and below one well 21, respectively, by moving the image pickup part 13 by the up-and-down moving mechanism 14 in the up-and-down direction (the direction of optical axis J1), acquired are a plurality of picked-up images which are picked up with the image pickup part 13 placed at different positions in the up-and-down direction. In other words, a plurality of picked-up images are acquired for the sample 9 while the focal position is changed along the optical axis J1. After finishing the image pickup of the sample 9 inside the well 21, the lighting part 12 and the image pickup part 13 are moved in the horizontal direction (i.e., in the X direction and the Y direction) by the lighting part moving mechanism 15 and the image pickup part moving mechanism 16 and disposed vertically above and below another well 21, respectively. Then, the sample 9 inside another well 21 is imaged in substantially the same manner as above. In the image pickup apparatus 1, a moving mechanism for moving the lighting part 12 and the image pickup part 13 as one unit may be provided. Further, the respective samples 9 inside the plurality of wells 21 may be imaged by the image pickup part 13 at the same time.

The control part 5 controls constituent elements of the image pickup apparatus 1, such as the lighting part 12, the image pickup part 13, the up-and-down moving mechanism 14, the lighting part moving mechanism 15, the image pickup part moving mechanism 16, and the like. Further, the control part 5 memorizes a plurality of picked-up images picked up by the image pickup part 13 and performs image processing for generating an all-in-focus image or the like from the plurality of picked-up images.

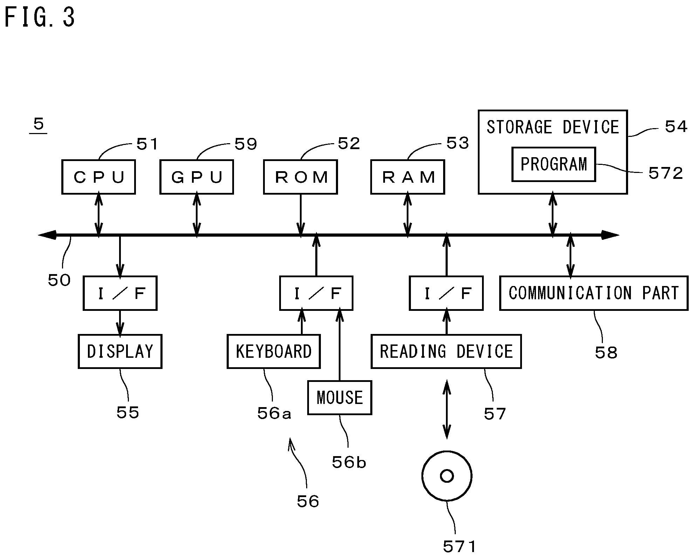

FIG. 3 is a view showing a configuration of a computer functioning as the control part 5. The computer has a configuration of a general computer system including a CPU 51, a ROM 52, a RAM 53, a storage device 54, a display 55, an input part 56, a reading device 57, a communication part 58, a GPU 59, and a bus 50. The CPU 51 performs various arithmetic operations. The GPU 59 performs various arithmetic operations relating to the image processing or the like. The ROM 52 stores therein a basic program. The RAM 53 stores therein various information. The storage device 54 memorizes therein information. The display 55 is a display part for displaying thereon various information such as an image or the like.

The input part 56 includes a keyboard 56a and a mouse 56b for receiving an input from an operator. The reading device 57 reads information from a non-transitory computer-readable recording medium 571 such as an optical disk, a magnetic disk, a magneto-optic disk, a memory card, or the like. The display 55, the keyboard 56a, the mouse 56b, and the reading device 57 are connected to the bus 50 via an interface I/F. The communication part 58 transmits and receives a signal to/from any other constituent element of the image pickup apparatus 1, or the like. The bus 50 is a signal circuit for connecting the CPU 51, the GPU 59, the ROM 52, the RAM 53, the storage device 54, the display 55, the input part 56, the reading device 57, and the communication part 58 to one another.

In the image pickup apparatus 1, a program 572 is read out from the recording medium 571 through the reading device 57 in advance and stored into the storage device 54. The program 572 has only to be computer-readable, and may be stored into the storage device 54, for example, via a network. The CPU 51 and the GPU 59 perform an arithmetic operation while using the RAM 53 and the storage device 54 in accordance with the program 572. The CPU 51 and the GPU 59 serve as a processor in the image pickup apparatus 1. Any constituent element other than the CPU 51 or the GPU 59 may be adopted to serve as the processor.

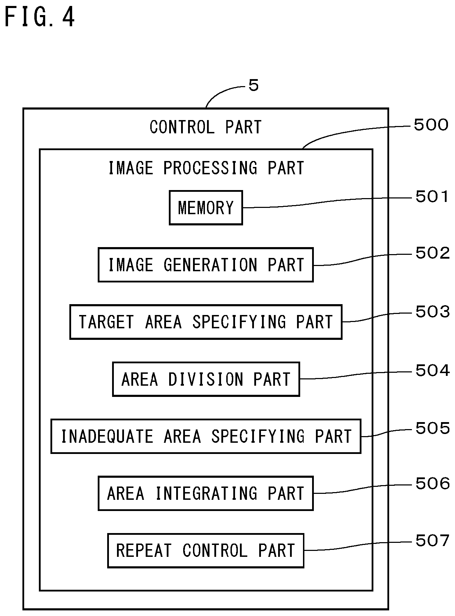

FIG. 4 is a block diagram showing a functional configuration of the control part 5 implemented when the above-described computer performs arithmetic processing or the like in accordance with the program 572. The control part 5 has an image processing part 500. The image processing part 500 is an image processing apparatus, and generates an all-in-focus image and divides an analysis target area in the all-in-focus image, as described later. The image processing part 500 includes a memory 501, an image generation part 502, a target area specifying part 503, an area division part 504, an inadequate area specifying part 505, an area integrating part 506, and a repeat control part 507. Details of these functions will be described later. All or part of the functions of the image processing part 500 may be implemented by a dedicated electric circuit, and each of the functions may be implemented by an individual program. Further, the image processing part 500 may be implemented by a plurality of computers.

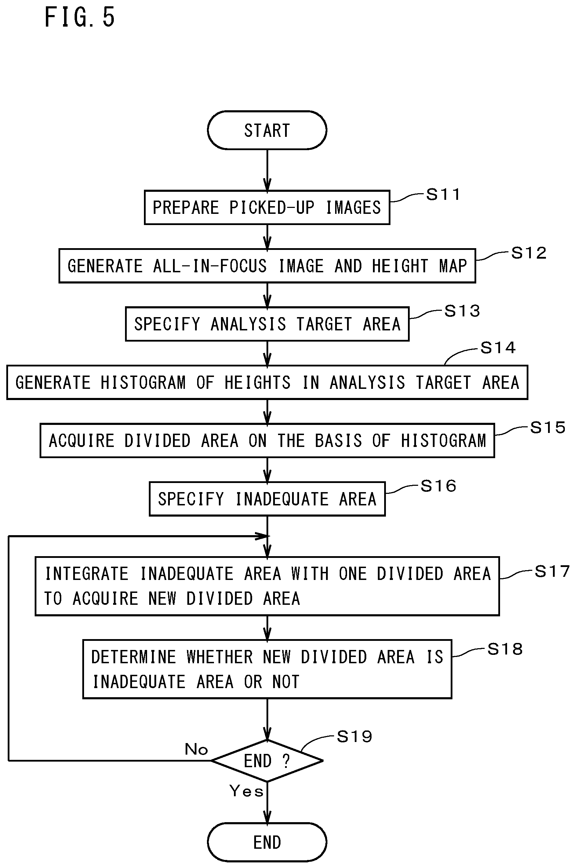

Next, with reference to FIG. 5, description will be made on processing for generating the all-in-focus image and dividing the analysis target area in the all-in-focus image. As described above, an operation of the image pickup apparatus 1 shown in FIG. 1 is controlled by the control part 5. First, the lighting part moving mechanism 15 and the image pickup part moving mechanism 16 are driven, and the lighting part 12 and the image pickup part 13 are thereby disposed above and below one well 21, respectively. Subsequently, the up-and-down moving mechanism 14 is driven, and the position of the image pickup part 13 in the up-and-down direction is thereby adjusted. Then, the image pickup part 13 acquires an picked-up image of the sample 9. The picked-up image is transferred to the image processing part 500 (see FIG. 4) and memorized into the memory 501. In the image pickup apparatus 1, image pickup of the sample 9 (i.e., acquisition of the picked-up image) performed by the image pickup part 13 is repeated while the position of the image pickup part 13 in the up-and-down direction is changed by the up-and-down moving mechanism 14.

FIG. 6 is a longitudinal sectional view showing one well 21. In the exemplary case shown in FIG. 6, the sample 9 is imaged in a state where the focal position on the optical axis J1 of the image pickup part 13 is arranged at each of the plurality of positions H0 to H5 represented by solid circles in FIG. 6. Thus, by imaging the sample 9 while changing the focal position along the optical axis J1, the plurality of picked-up images are acquired. The plurality of picked-up images are memorized into the memory 501 and prepared (Step S11). Typically, the plurality of positions H0 to H5 are aligned at regular intervals in the up-and-down direction (i.e., the Z direction). In an actual image pickup apparatus 1, on the optical axis J1, a large number of picked-up images are acquired by sequentially arranging the focal position at positions in the number sufficiently larger than the number in the exemplary case of FIG. 6 (e.g., several ten positions). In the present specification, the direction of approaching the image pickup part 13, along the optical axis J1, ((-Z) direction in FIG. 6) is a height direction.

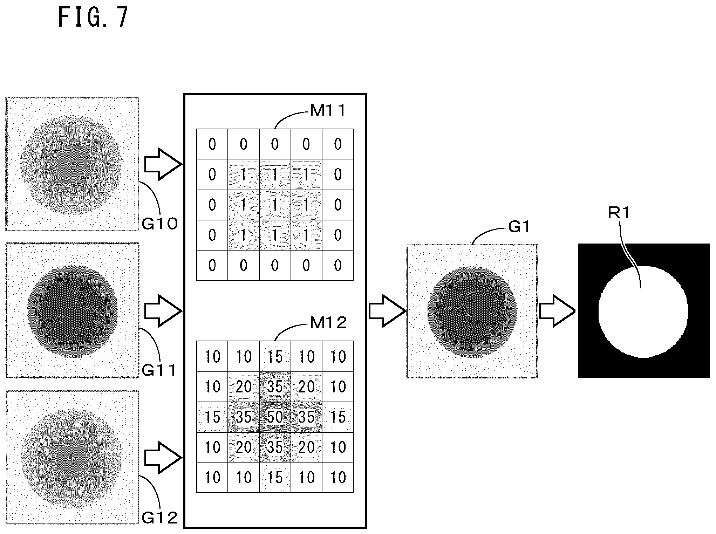

Subsequently, in the image generation part 502, the all-in-focus image and a height map are generated (Step S12). FIG. 7 is a view used for explaining generation of the all-in-focus image by the image generation part 502. The leftmost part of FIG. 7 shows the plurality of picked-up images G10 to G12. The upper stage of the second part from the left side shows an array M11 of image reference values described later, and the lower stage thereof shows an array M12 of reference sharpnesses described later. The third part from the left side shows the all-in-focus image G1, and the rightmost part shows an analysis target area R1 described later. Herein, by using the three picked-up images G10 to G12 acquired in a state where the focal position is arranged at three positions, respectively, a process for generating the all-in-focus image G1 and the height map will be described.

In each of the plurality of picked-up images G10 to G12, pixels are arranged in a row direction and a column direction. The plurality of pixels having the same position (hereinafter, referred to as a "pixel position") in the row direction and the column direction in the plurality of picked-up images G10 to G12 indicate positions overlapping one another in the direction of the optical axis J1 inside the well 21. Continuous numbers are given to the plurality of picked-up images G10 to G12, and to the three picked-up images G10 to G12 in FIG. 7, given are the numbers of "0", "1", and "2", respectively.

After preparing the plurality of picked-up images G10 to G12, a sharpness at each pixel position is calculated for each of the plurality of picked-up images G10 to G12. The sharpness is an index indicating clarity of an image at the pixel position and in the vicinity thereof, and herein the sharpness becomes higher as the clarity increases. The sharpness is, for example, edge strength, luminance variation, or the like, and typically calculated on the basis of a luminance change of pixels in an area which has a predetermined size and centers on the pixel position. **In** the calculation of the sharpness, a variance value of the luminances of the surrounding pixels of the pixel position, the maximum value of the luminances thereof, the minimum value of the luminances thereof, the luminance value of the pixel position, and the like may be used.

After calculating the plurality of sharpnesses from the plurality of picked-up images G10 to G12 at each pixel position, in the image generation part 502, the plurality of sharpnesses at the pixel position are compared with one another. Then, a number for the picked-up image having the highest sharpness among the plurality of sharpnesses is determined as an image reference value for the pixel position. The image reference value is the number for the picked-up image to be referred for determination of the luminance value at the pixel position of the all-in-focus image. At one pixel position, for example, when the sharpness of the picked-up image G11 is the highest among the plurality of sharpnesses in the plurality of picked-up images G10 to G12, the image reference value at the pixel position is "1".

As described above, the upper stage of the second part from the left side in FIG. 7 shows the array M11 of the image reference values at the plurality of pixel positions. Herein, for explanatory convenience, it is assumed that the number of pixels constituting each of the picked-up images G10 to G12 is 5×5=25 pixels. Paying attention to a central pixel position and the 8-neighbor pixel positions thereof, in the exemplary case shown in FIG. 7, the sharpness of the picked-up image G11 is high, and in the array M11 of the image reference values, the image reference values at these pixel positions are each "1".

Further, the sharpness (hereinafter, referred to as a "reference sharpness") corresponding to the image reference value at each pixel position is also specified. As described above, the lower stage of the second part from the left side in FIG. 7 shows the array M12 of the reference sharpnesses at the plurality of pixel positions. The reference sharpness at each pixel position is the sharpness at the pixel position of the picked-up image indicated by the image reference value at the pixel position. In the array M11 of the image reference values, for example, at the pixel position whose image reference value is "1", the sharpness at the pixel position of the picked-up image G11 serves as the reference sharpness. In the array M12 of the reference sharpnesses shown in FIG. 7, the color of the pixel position becomes darker as the reference sharpness increases.

Subsequently, the image generation part 502 calculates the luminance value at each pixel position of the all-in-focus image. In the calculation of the luminance value at each pixel position, the image reference values at surrounding pixel positions of the pixel position are considered (referred). The luminance value at each pixel position of the all-in-focus image is calculated by using, for example, Eq. 1.

$$(\text{Eq. 1})$$

$$
V(xn, yn)
$$
$$
= \frac{\sum\limits_{k=-fx}^{fx} \sum\limits_{l=-fy}^{fy} I(A(xn+k, yn+l), xn, yn) \exp\left(-\frac{k^2+l^2}{2\sigma_d^2}\right) \exp\left(-\frac{\left(1-S(xn+k, yn+l)\right)^2}{2\sigma_s^2}\right)}{\sum\limits_{k=-fx}^{fx} \sum\limits_{l=-fy}^{fy} \exp\left(-\frac{k^2+l^2}{2\sigma_d^2}\right) \exp\left(-\frac{\left(1-S(xn+k, yn+l)\right)^2}{2\sigma_s^2}\right)}
$$

In Eq. 1, the row direction and the column direction are represented as the x direction and the y direction, respectively, and "V(xn, yn)" represents a luminance value of the pixel position (hereinafter, referred to as a "specified pixel position") of any coordinates (xn, yn) in the all-in-focus image. "k" and "1" represent respective distances in the x direction and the y direction between the pixel position to be referred with respect to the specified pixel position and the specified pixel position. "fx" and "fy" represent respective maximum values of the distances in the x direction and the y direction and a range of the pixel positions to be referred with respect to the specified pixel position. "I(A(xn+k, yn+1), xn, yn)" represents a luminance value at the specified pixel position of the picked-up image indicated by the image reference value A(xn+k, yn+1) at the pixel position of the coordinates (xn+k, yn+1). "S(xn+k, yn+1)" represents a reference sharpness at the pixel position of the coordinates (xn+k, yn+1). Herein, it is assumed that the reference sharpness is normalized to a value from 0 to 1. "$\sigma_d$" represents a weighting factor for the distance and "$\sigma_s$" represents a weighting factor for the reference sharpness. In Eq. 1, a weighting amount for the distance and a weighting amount for the reference sharpness are represented by a Gaussian factor.

In Eq. 1, the luminance value at the specified pixel position of the all-in-focus image is calculated by reflecting the luminance value at the specified pixel position of the picked-up image indicated by the image reference value at each pixel position around the specified pixel position on the luminance value at the specified pixel position of the picked-up image indicated by the image reference value at the specified pixel position. Thus, by using a plurality of luminance values derived from image reference values in a pixel position group including the specified pixel position and the surrounding pixel positions of the specified pixel position, the luminance value at the specified pixel position of the all-in-focus image is calculated.

In Eq. 1, to the luminance value (the luminance value at the specified pixel position) of the picked-up image indicated by the image reference value of the surrounding pixel position, given are a weight in accordance with the distance between the surrounding pixel position and the specified pixel position and a weight in accordance with the reference sharpness at the surrounding pixel position. In more detail, the weight (an effect on the luminance value of the all-in-focus image) increases as the distance of the pixel position from the specified pixel position decreases. Further, the weight increases as the reference sharpness at the surrounding pixel position increases. In the image generation part 502, by using Eq. 1, the luminance values at all the pixel positions are calculated. The all-in-focus image G1 shown in the third part from the left side of FIG. 7 is thereby generated. In the all-in-focus image G1, in the area where the image reference value is switched, it is possible to smoothly change the luminance value. Further, in the image generation part 502, the luminance value at each surrounding pixel position of the specified pixel position in the picked-up image indicated by the image reference value at the surrounding pixel position may be reflected on the luminance value at the specified pixel position of the picked-up image indicated by the image reference value at the specified pixel position.

Subsequently, obtained is the height map indicating a height, in the direction of the optical axis J1, of a portion of the sample 9 corresponding to each pixel position of the all-in-focus image. Herein, since the image reference value at each pixel position indicates a number for the picked-up image which is most in focus on the pixel position, the image reference value can be regarded as the height of the sample 9 at the pixel position. Therefore, in one example, the array M11 of the image reference values shown in FIG. 7 serves as the height map.

On the other hand, the luminance value at each pixel position of the all-in-focus image G1 is calculated by using the image reference values at the surrounding pixel positions of the pixel position as well as the image reference value at the pixel position. Therefore, in terms of generation of the height map adjusted to the all-in-focus image G1, it is preferable that a height (hereinafter, referred to as a "composite height") which is obtained by reflecting the image reference values at surrounding pixel positions of each pixel position on the image reference value at the pixel position should be obtained as the height at the pixel position. Specifically, the composite height at each pixel position is calculated by using Eq. 2.

(Eq. 2)

$$
D(xn, yn)
$$

$$
= \frac{\sum_{k=-fx}^{fx}\sum_{l=-fy}^{fy} A(xn+k, yn+l) \exp\left(-\frac{k^2+l^2}{2\sigma_d^2}\right) \exp\left(-\frac{\left(1-S(xn+k, yn+l)\right)^2}{2\sigma_s^2}\right)}{\sum_{k=-fx}^{fx}\sum_{l=-fy}^{fy} \exp\left(-\frac{k^2+l^2}{2\sigma_d^2}\right) \exp\left(-\frac{\left(1-S(xn+k, yn+l)\right)^2}{2\sigma_s^2}\right)}
$$

In Eq. 2, like in Eq. 1, the row direction and the column direction are represented as the x direction and the y direction, respectively, and "D(xn, yn)" represents a composite height of the pixel position (i.e., specified pixel position) of any coordinates (xn, yn) in the all-in-focus image G1. "k" and "l" represent respective distances in the x direction and the y direction between the pixel position to be referred (i.e., the pixel position whose image reference value is reflected) with respect to the specified pixel position and the specified pixel position. "fx" and "fy" represent respective maximum values of the distances in the x direction and the y direction and a range (which can be regarded as a smoothing range) of the pixel positions to be referred with respect to the specified pixel position. "A(xn+k, yn+l)" represents an image reference value at the pixel position of the coordinates (xn+k, yn+l). "S(xn+k, yn+l)" represents a reference sharpness at the pixel position of the coordinates (xn+k, yn+l). Herein, it is assumed that the reference sharpness is normalized to a value from 0 to 1. "$\sigma_d$" represents a weighting factor for the distance and "$\sigma_s$" represents a weighting factor for the reference sharpness.

In Eq. 2, the composite height at the specified pixel position is calculated by reflecting the image reference values of the surrounding pixel positions of the specified pixel position on the image reference value at the specified pixel position. In other words, the composite height at the specified pixel position is calculated by using the image reference values in a pixel position group including the specified pixel position and the surrounding pixel positions of the specified pixel position. At that time, to the image reference value at the surrounding pixel position, given are a weight in accordance with the distance between the surrounding pixel position and the specified pixel position and a weight in accordance with the reference sharpness at the surrounding pixel position. In more detail, as the distance of the pixel position from the specified pixel position decreases, an effect (weight) that the image reference value of the pixel position produces on the composite height increases. Further, as the reference sharpness at the surrounding pixel position increases, an effect that the image reference value of the surrounding pixel position produces on the composite height increases.

In the image generation part 502, by using Eq. 2, the composite heights at all the pixel positions are calculated. A height map indicating the composite heights at all the pixel positions is thereby calculated. Like the luminance value of the all-in-focus image G1, the composite height at the specified pixel position is obtained from the image reference values in the pixel position group including the specified pixel position and surrounding pixel positions of the specified pixel position, and therefore an appropriate height map adjusted to the all-in-focus image G1 can be obtained. The composite height may be represented as a height from a predetermined reference position inside the well 21 on the basis of the distance between the focal positions used for the acquisition of the plurality of picked-up images G10 to G12 in Step S11. The all-in-focus image G1 and the height map are memorized into the memory 501 and prepared for the following processing.

Subsequently, in the target area specifying part 503, as shown in the rightmost part of FIG. 7, each analysis target area R1 is specified and extracted in the all-in-focus image G1 (Step S13). The analysis target area R1 is an area indicating a portion of the sample 9 in the all-in-focus image G1. In a case where a plurality of portions of the sample 9 are dispersed in the all-in-focus image G1, respective analysis target areas R1 are individually extracted. For specifying the analysis target area R1, used is a publicly-known method such as binarization using a predetermined threshold value, segmentation using Deep Learning, or the like.

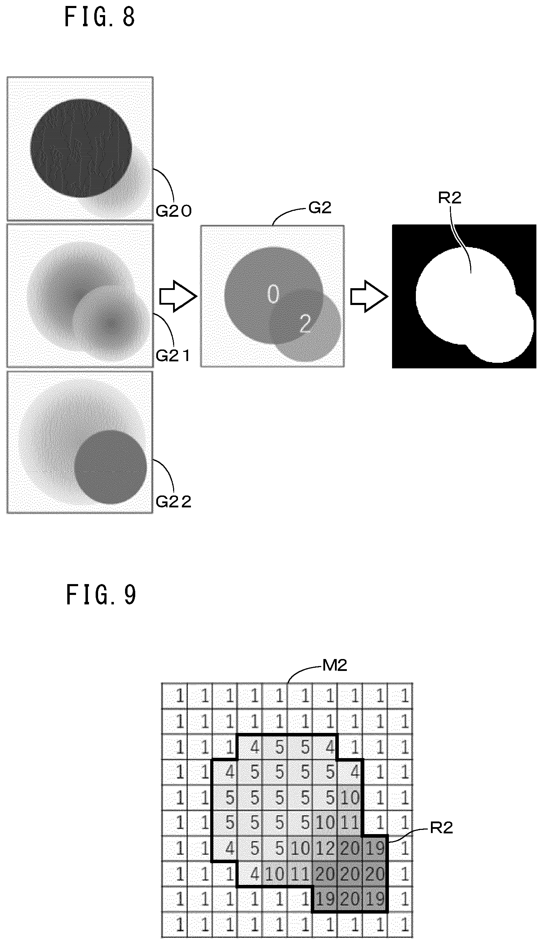

Herein, in the sample 9 represented by a solid line in FIG. 6, since cells or the like exist as one cluster in the well 21, an appropriate analysis target area R1 having a high degree of circularity is extracted as shown in the rightmost part of FIG. 7. The degree of circularity can be obtained by, for example, $(4\pi \times$ (area) / (length of circumference)$^2$). On the other hand, as indicated by two-dot chain lines in FIG. 6, in a case where the cells or the like exist as a plurality of clusters and the plurality of clusters overlap one another in the direction of the optical axis J1, a plurality of picked-up images G20 to G22 shown in the leftmost part of FIG. 8 are acquired. In this case, in the image generation part 502, an all-in-focus image G2 shown in the second part from the left side of FIG. 8 is generated. Further, in the all-in-focus image G2 shown in FIG. 8, "0" is written at the center of an area in focus (area having high sharpness) in the picked-up image G20, and "2" is written at the center of an area in focus in the picked-up image G22.

In the processing on the all-in-focus image G2 by the target area specifying part 503, an analysis target area R2 shown in the rightmost part of FIG. 8 is extracted. As described above, the analysis target area R2 is an area in which respective areas of the plurality of clusters overlap one another, and it is preferable not to treat the analysis target area R2 as one area. Though there is a possible case where a well-known area division method such as the Watershed method or the like is adopted, division of an area becomes difficult depending on the shape of the analysis target area R2. In the following Steps S14 to S19, a method for appropriately dividing the analysis target area R2 shown in FIG. 8 will be described. In a case where the plurality of analysis target areas are extracted, Steps S14 to S19 are executed on each of the analysis target areas.

FIG. 9 is a view showing the height map M2. The height map M2 is generated together with the all-in-focus image G2 shown in FIG. 8 in the processing of Step S12 performed by the image generation part 502. In the height map M2 shown in FIG. 9, the color of the pixel position becomes darker as the composite height increases. Further, a set of pixel positions included in the analysis target area R2 in the height map M2 shown in FIG. 8 are surrounded by a thick line. In the following description, the set of pixel positions in the height map M2 is similarly referred to as an "analysis target area R2". The same applies to divided areas D1 to D3 and integrated areas T1 and T2 described later.

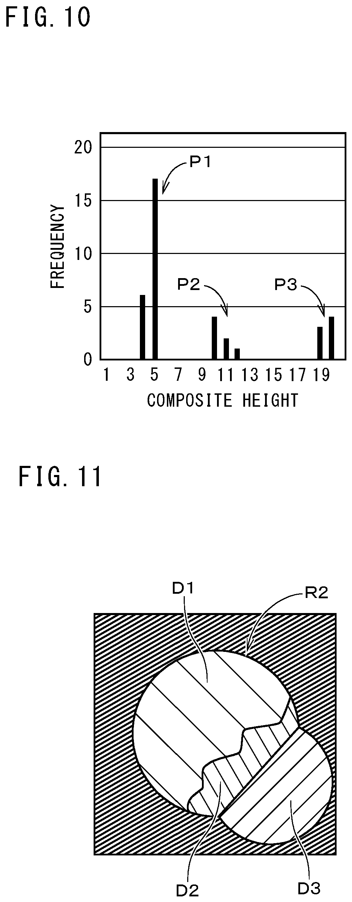

In the area division part 504, a histogram of composite heights in the analysis target area R2 is generated on the basis of the height map M2 (Step S14). FIG. 10 is a view showing a histogram of the heights in the analysis target area R2. In FIG. 10, the horizontal axis represents a composite height and the vertical axis represents a frequency. In the histogram of FIG. 10, there are a plurality of (three) peak regions P1 to P3. Typically, the plurality of peak regions P1 to P3 are present discretely. Each of the plurality of peak regions P1 to P3 includes a local peak in the histogram and a bar (a portion having a frequency higher than 0) around the peak. In the area division part 504, a set of pixel positions corresponding to each of the peak regions P1 to P3 is acquired as a divided area (Step S15). In other words, a set of pixel positions in which the composite heights are included in a range of each of the peak regions P1 to P3 is acquired as one divided area. When the set of pixel positions are a plurality of separated areas, each area may be treated as a divided area. The processing in Step S15 can be regarded as a process for acquiring a divided area by performing image binarization for the range of each of the peak regions P1 to P3 in the height map M2.

FIG. 11 is a view showing the plurality of divided areas D1 to D3 in the analysis target area R2. In FIG. 11, different parallel hatch lines are given to the plurality of divided areas D1 to D3, respectively. Thus, in the processings in Steps S14 and S15 performed by the area division part 504, the analysis target area R2 is divided into the plurality of divided areas D1 to D3 in accordance with the composite heights indicated by the height map M2. In the following description, the divided areas D1 to D3 corresponding to the three peak regions P1 to P3 shown in FIG. 10 are also referred to as a "first divided area D1", a "second divided area D2", and a "third divided area D3", respectively. Further, in the histogram, in a case where only one peak region is specified and a plurality of divided areas are not acquired (for example, the exemplary case shown in FIG. 7), no further processing is performed.

Subsequently, in the inadequate area specifying part 505, it is determined whether or not each of the plurality of divided areas D1 to D3 is an adequate area which satisfies a predetermined determination condition (Step S16). In the determination condition for the adequate area, a general feature value or combination of general feature values can be used. In one example, when each of the divided areas D1 to D3 satisfies both a first determination condition and a second determination condition, it is determined that the divided area is an adequate area, and when each of the divided areas D1 to D3 does not satisfy both the first determination condition and the second determination condition, it is determined that the divided area is an inadequate area. The first determination condition is that the length of the minor axis is not shorter than a first threshold value in a case where ellipse approximation (ellipse approximation in which the orientation of the major axis is changeable) is performed on each of the divided areas D1 to D3. The second determination condition is that the degree of circularity of each of the divided areas D1 to D3 is not lower than a second threshold value. The divided area (i.e., adequate area) which satisfies both the first determination condition and the second determination condition is an area having a somewhat large size and an almost circular shape.

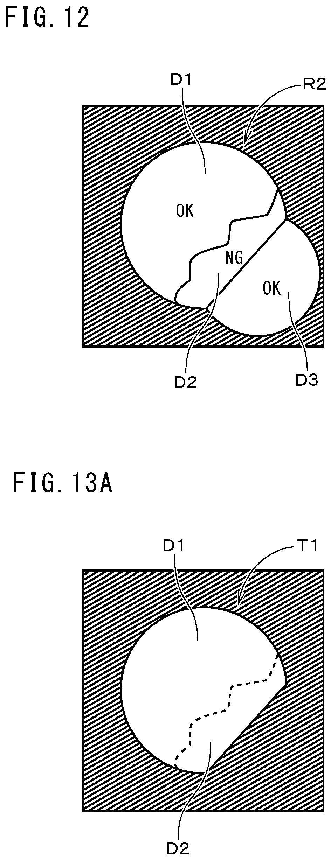

As shown in FIG. 12, in the analysis target area R2, the divided areas D1 and D3 inside which "OK" is written are adequate areas, and the divided area D2 inside which "NG" is written is an inadequate area. Step S16 executed by the inadequate area specifying part 505 is a process for specifying an inadequate area which does not satisfy a predetermined determination condition among the plurality of divided areas D1 to D3. In Step S16, when no inadequate area is specified, no further processing is performed. In the above-described determination conditions, any other feature value relating to the size, such as an area, a diameter, a length of circumference, or the like of each of the divided areas D1 to D3 may be used. Further, variation (standard deviation) in the luminance value within each of the divided areas D1 to D3 in the all-in-focus image G2, variation in the composite height within each of the divided areas D1 to D3 in the height map M2, or the like may be used, and in this case, the area becomes easier to be determined as an adequate area as the variation thereof decreases.

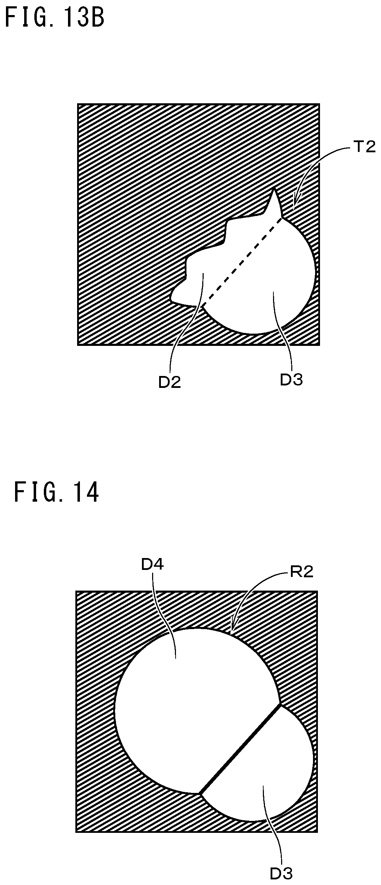

In the area integrating part 506, calculated is a determination score in a case where each of the inadequate areas is integrated with each of other divided areas which are in contact with the inadequate area. In the exemplary case shown in FIG. 12, since the divided area D2 which is the inadequate area is in contact with each of the divided area D1 and the divided area D3, a determination score in the integrated area T1 obtained by integrating the divided area D2 with the divided area D1 as shown in FIG. 13A and a determination score in the integrated area T2 obtained by integrating the divided area D2 with the divided area D3 as shown in FIG. 13B are calculated. As the determination score, a general feature value or combination of general feature values can be used. In one example, the degree of circularity is used as the determination score.

In the exemplary cases shown in FIGs. 13A and 13B, since the determination score in the integrated area T1 is higher than that in the integrated area T2, the integrated area T1 shown in FIG. 13A is determined as a new divided area. Thus, by integrating the inadequate area with one divided area on the basis of the determination score, as shown in FIG. 14, a new divided area D4 can be acquired (Step S17). In the determination score, a range (Max - Min), variation (standard deviation), or the like of the composite heights within each of the integrated areas T1 and T2 in the height map M2 may be incorporated. In this case, as the range or the variation decreases, the determination score becomes higher and an integrated area having uniform composite height becomes easier to be selected as a new divided area. Further, the range or variation of the luminance value within each of the integrated areas T1 and T2 in the all-in-focus image G2 may be incorporated into the determination score, and in this case, an integrated area having less visual strangeness becomes easier to be acquired as a new divided area.

After acquiring the new divided area D4, in the inadequate area specifying part 505, it is determined whether or not the new divided area D4 is an adequate area which satisfies a predetermined determination condition (Step S18). The determination condition used in Step S18 may be the same as that used in Step S16 or may be different therefrom. In the present exemplary processing, only the above-described first determination condition is used. Specifically, in a case where the ellipse approximation is performed on the new divided area D4, when the length of the minor axis is not shorter than a predetermined threshold value, it is determined that the divided area D4 is an adequate area, and when the length of the minor axis is shorter than the predetermined threshold value, it is determined that the divided area D4 is an inadequate area. In this case, the divided area D4 having a low degree of circularity but having a moderate size becomes easier to be determined as the adequate area.

In the exemplary case shown in FIG. 14, there is a state where the new divided area D4 is determined as an adequate area and the analysis target area R2 is divided into the divided area D3 which is an adequate area and the divided area D4 which is an adequate area. As described later, as to the divided area which is an inadequate area, integration with any one of other divided areas in Step S17 is repeated, but since the divided area D4 having a moderate size is determined as an adequate area, it is possible to prevent generation of an excessively large divided area. Step S18 executed by the inadequate area specifying part 505 is a process for specifying a new divided area as a new inadequate area when the new divided area does not satisfy a predetermined determination condition. The determination condition used in Step S18 may also include any of various feature values, like the determination condition used in Step S16.

In the repeat control part 507, it is checked if a predetermined end condition is satisfied. The end condition is that all the divided areas are adequate areas or there is no other divided area which is in contact with the inadequate area (in other words, the analysis target area R2 becomes one divided area). In the exemplary case shown in FIG. 14, since all the divided areas D3 and D4 included in the analysis target area R2 are adequate areas and therefore the end condition is satisfied, the image processing performed by the image processing part 500 is ended (Step S19). The divided areas D3 and D4 correspond to, for example, a plurality of clusters of cells or the like represented by two-dot chain lines in FIG. 6, respectively, and are individually analyzed. In a case where the analysis target area R2 includes an inadequate area and there is another divided area in contact with the inadequate area, the above-described Steps S17 and S18 are repeated (Step S19). When all the divided areas become adequate areas or there is no other divided area in contact with the inadequate area, the present image processing is ended (Step S19).

As described above, the image processing apparatus (in the above description, the image processing part 500) includes the memory 501 for memorizing therein the all-in-focus image G2 and the height map M2, the target area specifying part 503 for specifying the analysis target area R2 in the all-in-focus image G2, the area division part 504 for dividing the analysis target area R2 into the plurality of divided areas D1 to D3 in accordance with the heights indicated by the height map M2, the inadequate area specifying part 505 for specifying an inadequate area among the plurality of divided areas D1 to D3, which does not satisfy the predetermined determination condition, and the area integrating part 506 for acquiring the new divided area D4 by calculating the determination score in a case where the inadequate area is integrated with each of other divided areas which are in contact with the inadequate area and then integrating the inadequate area with one divided area on the basis of the determination score. Even in a case where a plurality of clusters of cells or the like are distributed widely in the height direction in the sample 9 and respective areas of the plurality of analysis targets (clusters of cells or the like) overlap one another in the analysis target area R2 like the all-in-focus image G2 of FIG. 8, it is thereby possible to appropriately divide the analysis target area R2 on the basis of the height distribution or the like. Further, by determining an evaluation index such as the determination score, the determination condition, or the like as appropriate, it is possible to extract a divided area having a desired shape or the like as an analysis area. As a result, it becomes possible to appropriately analyze the sample 9.

The preferable image processing apparatus further includes the image generation part 502 for generating the all-in-focus image G2 and the height map M2 on the basis of the plurality of picked-up images which are acquired by imaging the target (in the above description, the sample 9) while changing the focal position along the optical axis J1. It thereby becomes possible to prepare the appropriate all-in-focus image G2 and the appropriate height map M2.

Preferably, the area division part 504 generates the histogram of heights in the analysis target area R2 on the basis of the height map M2 and acquires the sets of pixel positions corresponding to the peak regions P1 to P3 in the histogram as the divided areas D1 to D3, respectively. It is thereby possible to acquire the divided areas D1 to D3 with high accuracy on the basis of the heights indicated by the height map M2.

Preferably, when the new divided area acquired by the area integrating part 506 does not satisfy the predetermined determination condition, the inadequate area specifying part 505 specifies the new divided area as the new inadequate area. When the new divided area becomes an inadequate area, a further integration processing is thereby performed and this makes it possible to suppress the new divided area from being left as the inadequate area. As a result, it is possible to more appropriately divide the analysis target area R2. Further, there may be a case where the determination score is referred in the inadequate area specifying part 505 and the new divided area is classified into the adequate area or the inadequate area on the basis of the determination score.

Preferably, in specification of the inadequate area by the inadequate area specifying part 505 and/or calculation of the determination score by the area integrating part 506, the heights indicated by the height map M2 are used. It thereby becomes possible to specify a divided area not having uniform height as the inadequate area and/or to appropriately acquire the new divided area having substantially uniform height.

Though only one image reference value is determined for each pixel position in Step S12 in the above-described exemplary processing performed by the image generation part 502, M image reference values (first to M-th image reference values) (M is an integer not smaller than 2 and smaller than the number of picked-up images) corresponding to the higher-order M sharpnesses, respectively, may be determined, like in Japanese Patent Application Laid Open Gazette No. 2022-51094 (above-described Document 2), which is incorporated by reference. In this case, from an equation like Eq. 1, by using a plurality of luminance values derived from the first to M-th image reference values in the pixel position group including each pixel position and the surrounding pixel positions of the pixel position, the luminance value at the pixel position of the all-in-focus image is calculated. Further, from an equation like Eq. 2, by using the first to M-th image reference values in the pixel position group including each pixel position and the surrounding pixel positions of the pixel position, the composite height at the pixel position in the height map is calculated

Thus, in the image generation part 502, at each pixel position, by comparison among the plurality of sharpnesses, the number for at least one picked-up image to be referred for determination of the luminance value at the pixel position of the all-in-focus image has only to be determined as the image reference value. It thereby becomes possible to generate a smooth all-in-focus image and an appropriate height map adjusted to the all-in-focus image, by using the image reference value. Further, the above-described Eqs. 1 and 2 used in the image generation part 502 are just examples and may be changed as appropriate.

In the image processing method, the image processing apparatus, and the image pickup apparatus 1 described above, various modifications can be made.

In the area division part 504, the divided area may be acquired not by using the histogram. There may be a case, for example, where a range of the heights of the first divided area, a range of the heights of the second divided area, and a range of the heights of the third divided area are determined in advance and an area within each range is acquired as the divided area in the height map.

Though a focal position changing mechanism for changing the focal position of the image pickup part 13 along the optical axis J1 is implemented by the up-and-down moving mechanism 14 for moving the image pickup part 13 in the exemplary case shown in FIG. 1, the focal position changing mechanism may be implemented by a mechanism for moving some lenses or the like in the image pickup part 13 along the optical axis J1. Further, a mechanism for moving the sample 9 along the optical axis J1 may be provided as the focal position changing mechanism.

Though the all-in-focus image is the target image to be processed by the image processing apparatus in the above-described preferred embodiment, the target image is not limited to the all-in-focus image, but may be, for example, one picked-up image. The target image may be any image representing a target viewed from the predetermined direction. Further, there may be a case where a height, in the predetermined direction, of a portion of the target corresponding to each pixel position of the target image is acquired by a length measuring device such as a laser length measuring device or the like and a height map indicating the height is acquired. Furthermore, in a case where the all-in-focus image is used, the predetermined direction is a direction in parallel with the optical axis J1 of the image pickup part 13.

Though the transmission image of the sample 9 is acquired as the picked-up image in the above-described preferred embodiment, a fluorescent image or the like of the sample 9 may be acquired as the picked-up image. Further, the target may be any object other than the cells or the like.

The image processing part 500 (image processing apparatus) may be used independently of the image pickup apparatus 1.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and aspects can be devised without departing from the scope of the invention.

**REFERENCE SIGNS LIST**

| | |
|---|---|
| 1 | Image pickup apparatus |
| 5 | Control part |
| 9 | Sample |
| 12 | Lighting part |
| 13 | Image pickup part |
| 14 | Up-and-down moving mechanism |
| 500 | Image processing part |
| 501 | Memory |
| 502 | Image generation part |
| 503 | Target area specifying part |
| 504 | Area division part |
| 505 | Inadequate area specifying part |
| 506 | Area integrating part |
| 572 | Program |
| D1 to D3 | Divided area |
| D4 | New divided area |
| G1, G2 | All-in-focus image |
| G10 to G12, G20 to G22 | Picked-up image |
| J1 | Optical axis |
| M2, M11 | Height map |
| P1 to P3 | Peak region |
| R1, R2 | Analysis target area |
| S11 to S19 | Step |

**Claims**

1. An image processing method, comprising:

   a) preparing a target image representing a target (9) viewed from a predetermined direction and a height map (M2, M11) indicating a height, in said predetermined direction, of a portion of said target corresponding to each pixel position of said target image (S11, S12);
   b) specifying an analysis target area (R1, R2) in said target image (S13);
   c) dividing said analysis target area into a plurality of divided areas (D1 to D3) in accordance with heights indicated by said height map (S14, S15);
   d) specifying an inadequate area among said plurality of divided areas, which does not satisfy a predetermined determination condition (S16); and
   e) acquiring a new divided area (D4) by calculating a determination score in a case where said inadequate area is integrated with each of divided areas which are in contact with said inadequate area and then integrating said inadequate area with one divided area on the basis of said determination score (S17).

2. The image processing method according to claim 1, wherein
   said operation a) comprises:

   a1) preparing a plurality of picked-up images (G10 to G12, G20 to G22) which are acquired by imaging said target while changing a focal position along an optical axis (J1) in parallel with said predetermined direction (S11); and
   a2) generating an all-in-focus image (G1, G2) which is said target image and said height map on the basis of said plurality of picked-up images (S12).

3. The image processing method according to claim 1 or 2, wherein
   said operation c) comprises:

   generating a histogram of heights in said analysis target area on the basis of said height map (S14); and
   acquiring a set of pixel positions corresponding to each peak region (P1 to P3) in said histogram as a divided area (S15).

4. The image processing method according to any one of claims 1 to 3, further comprising:
   specifying said new divided area acquired in said operation e) as a new inadequate area when said new divided area does not satisfy a predetermined determination condition (S18).

5. The image processing method according to any one of claims 1 to 4, wherein
   in specification of said inadequate area in said operation d) and/or calculation of said determination score in said operation e), a height indicated by said height map is used.

6. An image processing apparatus (500), comprising:

   a memory (501) for memorizing therein a target image representing a target (9) viewed from a predetermined direction and a height map (M2, M11) indicating a height, in said predetermined direction, of a portion of said target corresponding to each pixel position of said target image;
   a target area specifying part (503) for specifying an analysis target area (R1, R2) in said target image;
   an area division part (504) for dividing said analysis target area into a plurality of divided areas (D1 to D3) in accordance with heights indicated by said height map;
   an inadequate area specifying part (505) for specifying an inadequate area among said plurality of divided areas, which does not satisfy a predetermined determination condition; and
   an area integrating part (506) for acquiring a new divided area (D4) by calculating a determination score in a case where said inadequate area is integrated with each of divided areas which are in contact with said inadequate area and then integrating said inadequate area with one divided area on the basis of said determination score.

7. The image processing apparatus according to claim 6, further comprising:
   an image generation part (502) for generating an all-in-focus image (G1, G2) which is said target image and said height map on the basis of a plurality of picked-up images (G10 to G12, G20 to G22) which are acquired by imaging said target while changing a focal position along an optical axis (J1) in parallel with said predetermined direction.

8. The image processing apparatus according to claim 6 or 7, wherein
said area division part generates a histogram of heights in said analysis target area on the basis of said height map and acquires a set of pixel positions corresponding to each peak region (P1 to P3) in said histogram as a divided area.

9. The image processing apparatus according to any one of claims 6 to 8, wherein
when said new divided area acquired by said area integrating part does not satisfy a predetermined determination condition, said inadequate area specifying part specifies said new divided area as a new inadequate area.

10. The image processing apparatus according to any one of claims 6 to 9, wherein
in specification of said inadequate area by said inadequate area specifying part and/or calculation of said determination score by said area integrating part, a height indicated by said height map is used.

11. An image pickup apparatus (1), comprising:

said image processing apparatus according to any one of claims 6 to 10;
an image pickup part (13) for imaging said target;
a lighting part (12) for emitting light toward said target; and
a focal position changing mechanism (14) for changing a focal position of said image pickup part along an optical axis (J1).

12. A computer-readable program (572) to cause a computer (5) to perform image processing,
said program being executed by a computer to cause said computer to perform:

a) preparing a target image representing a target (9) viewed from a predetermined direction and a height map (M2, M11) indicating a height, in said predetermined direction, of a portion of said target corresponding to each pixel position of said target image (S11, S12);
b) specifying an analysis target area (R1, R2) in said target image (S13);
c) dividing said analysis target area into a plurality of divided areas (D1 to D3) in accordance with heights indicated by said height map (S14, S15);
d) specifying an inadequate area among said plurality of divided areas, which does not satisfy a predetermined determination condition (S16); and
e) acquiring a new divided area (D4) by calculating a determination score in a case where said inadequate area is integrated with each of divided areas which are in contact with said inadequate area and then integrating said inadequate area with one divided area on the basis of said determination score (S17).

FIG. 1

FIG. 2

FIG. 3

EP 4 704 028 A1

FIG. 4

CONTROL PART — 5

── 500

IMAGE PROCESSING PART

| MEMORY | ── 501

| IMAGE GENERATION PART | ── 502

| TARGET AREA SPECIFYING PART | ── 503

| AREA DIVISION PART | ── 504

| INADEQUATE AREA SPECIFYING PART | ── 505

| AREA INTEGRATING PART | ── 506

| REPEAT CONTROL PART | ── 507

# FIG. 5

START

PREPARE PICKED-UP IMAGES ——S11

GENERATE ALL-IN-FOCUS IMAGE AND HEIGHT MAP ——S12

SPECIFY ANALYSIS TARGET AREA ——S13

GENERATE HISTOGRAM OF HEIGHTS IN ANALYSIS TARGET AREA ——S14

ACQUIRE DIVIDED AREA ON THE BASIS OF HISTOGRAM ——S15

SPECIFY INADEQUATE AREA ——S16

INTEGRATE INADEQUATE AREA WITH ONE DIVIDED AREA TO ACQUIRE NEW DIVIDED AREA ——S17

DETERMINE WHETHER NEW DIVIDED AREA IS INADEQUATE AREA OR NOT ——S18

No    END ? ——S19

Yes

END

FIG. 6

FIG. 7

FIG. 8

FIG. 9

FIG. 10

FIG. 11

FIG. 12

FIG. 13A

FIG. 13B

FIG. 14

Europäisches
Patentamt

European
Patent Office

Office européen
des brevets

# EUROPEAN SEARCH REPORT

**Application Number**

EP 25 18 3521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 11 168 976 B2 (ZEISS CARL MICROSCOPY GMBH [DE]) 9 November 2021 (2021-11-09) * column 2, line 32 * * column 4, lines 15-17 * * column 5, lines 26-27, 35-37 * * column 9, lines 59-60 * * column 10, lines 3-6 * * column 11, lines 13-18 * * claims 1,6 * ----- | 1-12 | INV. G06T7/00 G06T7/11 ADD. G06V10/50 |
| Y | US 2016/163043 A1 (MIMURA YUSUKE [JP] ET AL) 9 June 2016 (2016-06-09) * paragraphs [0155], [0157]; claims 1,6 * ----- | 1-12 | |

**TECHNICAL FIELDS SEARCHED (IPC)**

G06T
G06V

The present search report has been drawn up for all claims

| Place of search | Date of completion of the search | Examiner |
|---|---|---|
| Munich | 22 July 2025 | Üreyen, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
..........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 18 3521

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | Publication date | Patent family member(s) | | Publication date |
|---|---|---|---|---|---|
| US 11168976 | B2 | 09-11-2021 | CN | 112833812 A | 25-05-2021 |
| | | | DE | 102019131693 A1 | 27-05-2021 |
| | | | US | 2021156669 A1 | 27-05-2021 |
| US 2016163043 | A1 | 09-06-2016 | EP | 3124967 A1 | 01-02-2017 |
| | | | JP | 5804220 B1 | 04-11-2015 |
| | | | JP | WO2015145643 A1 | 13-04-2017 |
| | | | US | 2016163043 A1 | 09-06-2016 |
| | | | WO | 2015145643 A1 | 01-10-2015 |

EPO FORM P0459

For more details about this annex : see Official Journal of the European Patent Office, No. 12/82

**EP 4 704 028 A1**

## REFERENCES CITED IN THE DESCRIPTION

**Patent documents cited in the description**

- JP 2024144089 A
- JP 2018042006 A
- JP 2022051094 A